# EUROPÄISCHE PATENTSCHRIFT

(11) **EP 2 047 104 B1**
(45) Veröffentlichungstag und Bekanntmachung des Hinweises auf die Patenterteilung: **01.09.2010**
(21) Anmeldenummer: 07722525.8
(22) Anmeldetag: 15.06.2007
(51) Int. Cl.: F04C 29/12, F16K 11/10

(54) **VAKUUMPUMPE**
VACUUM PUMP
POMPE À VIDE

(30) Priorität: 21.07.2006 DE 102006033736
(43) Veröffentlichungstag der Anmeldung: 15.04.2009
(73) Patentinhaber: ixetic Hückeswagen GmbH, 42499 Hückeswagen (DE)
(72) Erfinder: KUPCERIC, Mirko, 42897 Remscheid (DE)
(86) Internationale Anmeldenummer: PCT/DE2007/001062
(87) Internationale Veröffentlichungsnummer: WO 2008/011855

(56) Entgegenhaltungen:
- DE-A1- 10 000 755
- DE-B3-102004 034 926
- FR-A- 2 687 210
- JP-A- 2001 342 980

## Beschreibung

Die Erfindung betrifft eine Vakuumpumpe, insbesondere eine Flügelzellenpumpe, zum Erzeugen eines Unterdrucks in einem Bremskraftverstärker eines Kraftfahrzeugs, mit einem Druckraum, der über ein Austritts-Rückschlagventil mit einem Druckentlastungsraum, insbesondere mit der Umgebung, in Verbindung steht.

Aus der DE 10 2004 034 926 B3 ist eine Vakuumpumpe gemäß dem Oberbegriff des Anspruchs 1 bekannt.

Aufgabe der Erfindung ist es, die Herstellung einer Vakuumpumpe gemäß dem Oberbegriff des Anspruchs 1 zu vereinfachen.

Die Aufgabe ist bei einer Vakuumpumpe, insbesondere einer Flügelzellenpumpe, zum Erzeugen eines Unterdrucks in einem Bremskraftverstärker eines Kraftfahrzeugs, mit einem Druckraum, der über ein Austritts-Rückschlagventil mit einem Druckentlastungsraum, insbesondere mit der Umgebung, in Verbindung steht, durch den kennzeichnenden Teil des Anspruchs 1 gelöst. Das Austritts-Rückschlagventil ist in einer Multifunktionsventileinrichtung mit einem Druckentlastungsventil kombiniert, über das ein Saugraum der Vakuumpumpe mit dem Druckentlastungsraum, insbesondere mit der Umgebung, in Verbindung steht. Das Austritts-Rückschlagventil trennt den Druckraum von der Umgebung ab. Im normalen Betrieb der Vakuumpumpe wird über das Austritts-Rückschlagventil ein Öl/Luft-Gemisch aus dem Druckraum heraus gedrückt. Durch das Druckentlastungsventil werden Druckspitzen, die zum Beispiel durch ein Rückwärtsdrehen des Rotors entgegen der normalen Drehrichtung verursacht werden können, wirksam abgebaut. Durch die Kombination der beiden Ventile in einem Bauteil werden die Herstellung und die Montage der Vakuumpumpe erheblich vereinfacht.

Die Multifunktionsventileinrichtung umfasst einen gemeinsamen Multifunktionsventilkörper für das Austritts-Rückschlagventil und das Druckentlastungsventil. Gemäß der Erfindung werden die Funktionen des Austritts-Rückschlagventils und des Druckentlastungsventils in einem Bauteil zusammengefasst.

Der gemeinsame Multifunktionsventilkörper weist einen rohrförmigen Grundkörper mit einem axialen Druckentlastungsabschnitt und einem axialen Austrittsabschnitt auf. Vorzugsweise hat der Druckentlastungsabschnitt einen kleineren Durchmesser als der Austrittsabschnitt.

Ein bevorzugtes Ausführungsbeispiel der Vakuumpumpe ist **dadurch gekennzeichnet, dass** der Druckentlastungsabschnitt durch eine Trennwand von dem Austrittsabschnitt getrennt ist. Vorzugsweise weist der Grundkörper im Bereich der Trennwand eine umlaufende Stufe auf, die einen Anschlag bei der Montage des Grundkörpers bildet.

Ein weiteres bevorzugtes Ausführungsbeispiel der Vakuumpumpe ist **dadurch gekennzeichnet, dass** der Druckentlastungsabschnitt an einem axialen Ende zum Saugraum hin geöffnet ist. Das andere axiale Ende des Druckentlastungsabschnitts ist durch die Trennwand verschlossen. Der Begriff axial bezieht sich im Zusammenhang mit dem rohrförmigen Grundkörper auf die Längsachse des im Wesentlichen kreiszylindermantelförmigen Multifunktionsventilkörpers.

Ein weiteres bevorzugtes Ausführungsbeispiel der Vakuumpumpe ist **dadurch gekennzeichnet, dass** der Druckentlastungsabschnitt radiale Druckentlastungsöffnungen aufweist, die durch eine schlauchartige Ventilmembran verschlossen sind. Die schlauchartige Ventilmembran ermöglicht den Abbau von Druckspitzen im Saugraum und verhindert eine unerwünschte Verbindung zwischen dem Druckraum und dem Saugraum. Zu diesem Zweck ist die schlauchartige Ventilmembran von außen über den Druckentlastungsabschnitt gestülpt.

Ein weiteres bevorzugtes Ausführungsbeispiel der Vakuumpumpe ist **dadurch gekennzeichnet, dass** der Druckentlastungsabschnitt einen Ringraum begrenzt, der über mindestens eine Durchgangsöffnung in dem rohrförmigen Grundkörper mit einem von dem Austrittsabschnitt begrenzten Austrittsinnenraum in Verbindung steht. Der Ringraum wird radial innen von dem Druckentlastungsabschnitt und radial außen von dem Gehäuse der Vakuumpumpe begrenzt.

Ein weiteres bevorzugtes Ausführungsbeispiel der Vakuumpumpe ist **dadurch gekennzeichnet, dass** der Austrittsinnenraum über die Durchgangsöffnung mit dem Druckraum in Verbindung steht. Vorzugsweise ist der Druckraum über einen Verbindungskanal mit dem Austrittsinnenraum verbunden.

Ein weiteres bevorzugtes Ausführungsbeispiel der Vakuumpumpe ist **dadurch gekennzeichnet, dass** der Austrittsinnenraum an einem axialen Ende des Austrittsabschnitts durch eine Flachformfeder verschlossen ist. Das andere axiale Ende des Austrittsabschnitts ist durch die Trennwand verschlossen.

Ein weiteres bevorzugtes Ausführungsbeispiel der Vakuumpumpe ist durch einen Rotor gekennzeichnet, der drehbar in einem Gehäuse angeordnet ist und mindestens einen Flügel aufweist, der einen Arbeitsraum in dem Gehäuse in den Druckraum und den Saugraum unterteilt.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: eine erfindungsgemäße Vakuumpumpe mit Blick in den Ar beitsraum und
- Figur 2: die Ansicht eines Schnitts entlang der Linie II-II in Figur 1.

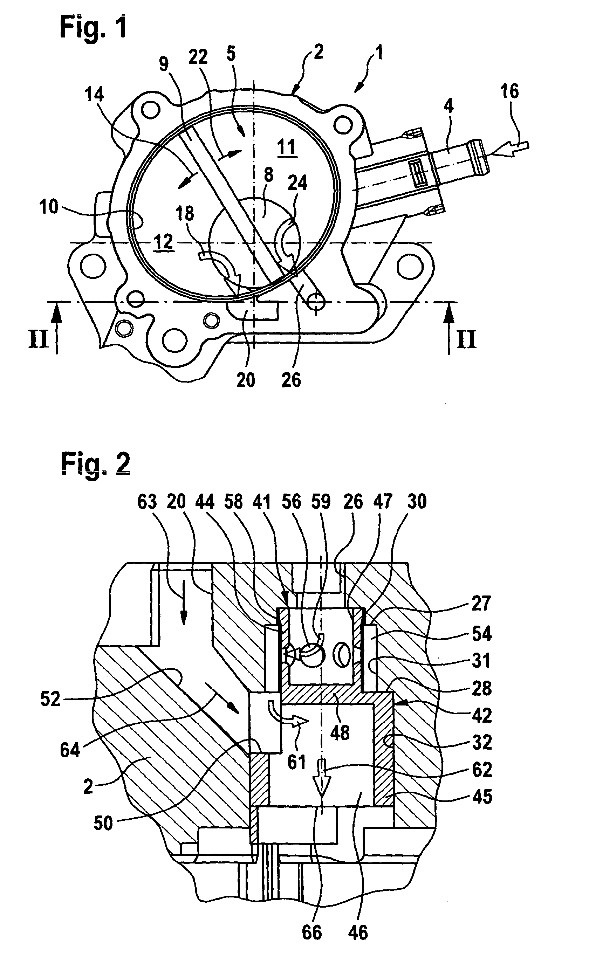

In den Figuren 1 und 2 ist eine erfindungsgemäße Vakuumpumpe 1 in verschiedenen Ansichten dargestellt. Bei der Vakuumpumpe 1 handelt es sich um eine Flügelzellenpumpe mit einem Gehäuse 2, das einen Sauganschluss 4 und einen Druckanschluss aufweist. In dem Gehäuse 2 ist ein Arbeitsraum 5 vorgesehen, in dem ein Rotor 8 drehbar angeordnet ist. In oder an dem Rotor 8 ist ein Flügel 9 verschiebbar geführt. Durch den Flügel 9 wird der Arbeitsraum 5 innerhalb einer Hubkontur 10 in einen Saugraum 11 und einen Druckraum 12 unterteilt. Der Druckraum 12 steht mit dem (nicht dargestellten) Druckanschluss und der Saugraum 11 mit dem Sauganschluss 4 in Verbindung. Der Rotor 8 ist in einer Betriebsdrehrichtung 14 angetrieben.

Wenn sich der Rotor 8 mit dem Flügel 9 in Betriebsdrehrichtung 14 dreht, dann wird ein Medium, insbesondere Luft beziehungsweise ein Luft/Öl-Gemisch, in dem Saugraum 11 angesaugt und aus dem Druckraum 12 heraus gefördert, wie durch einen Pfeil 18 angedeutet ist. Durch einen Pfeil 16 ist in den Saugraum 11 angesaugtes Medium angedeutet. Eine derartige Flügelzellenpumpe 1 mit einem Flügel 9 wird auch als Monoflügelzellenpumpe bezeichnet. In einer bevorzugten Anwendung wird die Monoflügelzellenpumpe dazu verwendet, einen Unterdruck, das heißt ein Vakuum, an einen Bremskraftverstärker eines Kraftfahrzeugs anzulegen. Daher wird die Monoflügelzellenpumpe auch als Monoflügelvakuum- oder als Einflügelvakuumpumpe bezeichnet.

Das aus dem Druckraum 12 heraus geförderte Medium gelangt, wie durch den Pfeil 18 angedeutet ist, in einen Austrittsausgang 20. Bei einem Rückwärtsdrehen des Rotors 8 in eine Rückwärtsdrehrichtung, die durch einen Pfeil 22 angedeutet ist, entstehen in dem Saugraum 11 der Vakuumpumpe 1 Druckspitzen, die zu einem unerwünschten Flügelbruch und damit zu einem Versagen der Vakuumpumpe 1 führen können. Für einen effektiven Abbau der Druckspitzen ist der Saugraum 11, wie durch einen Pfeil 24 angedeutet ist, mit einem Druckentlastungsausgang 26 verbunden.

In Figur 2 ist die Ansicht eines Schnitts entlang der Linie II-II in Figur 1 dargestellt. In Figur 2 sieht man, dass der Druckentlastungsausgang 26 Teil einer mehrstufigen Bohrung ist, die ausgehend von dem Druckentlastungsausgang 26 in axialer Richtung drei Aufnahmeabschnitte 30, 31 und 32 mit unterschiedlichen Durchmessern aufweist. Der Druckentlastungsausgang 26 weist den kleinsten Durchmesser auf. Der Aufnahmeabschnitt 32 weist den größten Durchmesser auf. Der Aufnahmeabschnitt 30 weist einen größeren Durchmesser als der Druckentlastungsausgang 26, aber einen kleineren Durchmesser als der Aufnahmeabschnitt 31 auf. Zwischen dem Druckentlastungsausgang 26 und dem Aufnahmeabschnitt 30 ist in dem Gehäuse 2 eine umlaufende Stufe 27 ausgebildet. Zwischen dem Aufnahmeabschnitt 31 und dem Aufnahmeabschnitt 32 ist eine weitere umlaufende Stufe 28 ausgebildet.

In den Aufnahmeabschnitten 30, 31 und 32 der mehrstufigen Bohrung, die von dem Druckentlastungsausgang 26 ausgeht, ist eine Multifunktionsventileinrichtung 41 mit einem einstückigen Multifunktionsventilkörper 42 aufgenommen. Der Multifunktionsventilkörper 42 umfasst einen rohrförmigen Grundkörper mit einem Druckentlastungsabschnitt 44 und einem Austrittsabschnitt 45. Der Druckentlastungsabschnitt 44 hat einen kleineren Durchmesser als der Austrittsabschnitt 45. Der Austrittsabschnitt 45 hat im Wesentlichen die Gestalt eines Kreiszylindermantels, der in seinem Inneren einen Austrittsinnenraum 46 begrenzt. Der Druckentlastungsabschnitt 44 hat ebenfalls im Wesentlichen die Gestalt eines Kreiszylindermantels, der in seinem Inneren einen Druckentlastungsinnenraum 47 begrenzt. Der Druckentlastungsinnenraum 47 ist durch eine Trennwand 48 von dem Austrittsinnenraum 46 getrennt.

Im Bereich der Trennwand 48 weist der Multifunktionsventilkörper 42 eine Durchgangsöffnung 50 auf, die eine Verbindung zwischen dem Austrittsinnenraum 46 und einem Verbindungskanal 52 schafft. Der Verbindungskanal 52 wiederum schafft eine Verbindung zwischen dem Austrittsausgang 20 und der Durchgangsöffnung 50 zu dem Austrittsinnenraum 46.

In radialer Richtung ist zwischen dem Druckentlastungsabschnitt 44 und dem Gehäuse 2 ein Ringraum 54 ausgespart, der mit der Durchgangsöffnung 50 und somit mit dem Austrittsinnenraum 46 in Verbindung steht. Der Druckentlastungsabschnitt 44 weist in radialer Richtung mehrere Druckentlastungsöffnungen 56 auf, die den Druckentlastungsinnenraum 47 mit dem Ringraum 54 verbinden. Radial außen sind die Druckentlastungsöffnungen 56 durch eine schlauchartige Ventilmembran 58 verschlossen, die außen über den Druckentlastungsabschnitt 44 gestülpt ist.

Durch einen Pfeil 59 ist in Figur 2 angedeutet, dass mit Druck beaufschlagtes Medium aus dem Druckentlastungsausgang 26 durch die Druckentlastungsöffnungen 56 in den Ringraum 54 gelangt. Durch einen weiteren Pfeil 61 ist in Figur 2 angedeutet, dass das druckbeaufschlagte Medium aus dem Ringraum 54 durch die Durchgangsöffnung 50 in den Austrittsinnenraum 46 gelangt. Durch einen weiteren Pfeil 62 ist angedeutet, dass das Medium aus dem Druckentlastungsausgang 26 zusammen mit dem Medium aus dem Austrittsausgang 20, das durch Pfeile 63, 64 angedeutet ist, in die Umgebung gelangt. Eine Flachformfeder 66 ermöglicht den Austritt des Mediums aus dem Austrittsinnenraum 46.

Im Rückwärtsdrehbetrieb des Rotors 8 wird der Druck in den Saugraum 11 über die Multifunktionsventileinrichtung 41 abgebaut. Dabei strömt mit Druck beaufschlagtes Medium, insbesondere ein Öl/Luft-Gemisch, über die radialen Druckentlastungsöffnungen 56 in dem Druckentlastungsabschnitt 44 durch Öffnen der Ventilmembran 58 ab und wird über den normalen Austritt der Vakuumpumpe 1 in die Umgebung, d. h. in den Kurbelwellenraum des Verbrennungsmotors, zurückgeführt.

### Bezugszeichenllste

- 1.: Flügelzellenpumpe
- 2.: Gehäuse
- 4.: Sauganschluss
- 5.: Arbeitsraum
- 8.: Rotor
- 9.: Flügel
- 10.: Hubkontur
- 11.: Saugraum
- 12.: Druckraum
- 14.: Betriebsdrehrichtung
- 16.: Pfeil
- 18.: Pfeil
- 20.: Austrittsausgang
- 22.: Rückwärtsdrehrichtung
- 24.: Pfeil
- 26.: Druckentlastungsausgang
- 27.: Stufe
- 28.: Stufe
- 30.: Aufnahmeabschnitt
- 31.: Aufnahmeabschnitt
- 32.: Aufnahmeabschnitt
- 41.: Multifunktionsventileinrichtung
- 42.: Multifunktionsventilkörper
- 44.: Druckentlastungsabschnitt
- 45.: Austrittsabschnitt
- 46.: Austrittsinnenraum
- 47.: Druckentlastungsinnenraum
- 48.: Trennwand
- 50.: Durchgangsöffnung
- 52.: Verbindungskanal
- 54.: Ringraum
- 56.: Druckentlastungsöffnung
- 58.: Ventilmembran
- 59.: Pfeil
- 61.: Pfeil
- 62.: Pfeil
- 63.: Pfeil
- 64.: Pfeil
- 66.: Flachformfeder

## Patentansprüche

1. Vakuumpumpe, insbesondere Flügelzellenpumpe, zum Erzeugen eines Unterdrucks in einem Bremskraftverstärker eines Kraftfahrzeugs, mit einem Druckraum (12), der über ein Austritts-Rückschlagventil mit einem Druckentlastungsraum, insbesondere mit der Umgebung, in Verbindung steht, wobei das Austritts-Rückschlagventil in einer Multifunktionsventileinrichtung (41) mit einem Druckentlastungsventil kombiniert ist, über das ein Saugraum (11) der Vakuumpumpe mit dem Druckentlastungsraum, insbesondere mit der Umgebung, in Verbindung steht,
wobei die Multifunktionsventileinrichtung (41) einen gemeinsamen Multifunktionsventilkörper (42) für das Austritts-Rückschlagventil und das Druckentlastungsventil umfasst, **dadurch gekennzeichnet, dass** der gemeinsame Multifunktionsventilkörper (42) einen rohrförmigen Grundkörper mit einem axialen Druckentlastungsabschnitt (44) und einem axialen Austrittsabschnitt (45) aufweist.

2. Vakuumpumpe nach Anspruch 1, **dadurch gekennzeichnet, dass** der Druckentlastungsabschnitt (44) durch eine Trennwand (48) von dem Austrittsabschnitt (45) getrennt ist.

3. Vakuumpumpe nach Anspruch 1 oder 2, **dadurch gekennzeichnet, dass** der Druckentlastungsabschnitt (44) an einem axialen Ende zum Saugraum (11) hin geöffnet ist.

4. Vakuumpumpe nach einem der Ansprüche 1 bis 3, **dadurch gekennzeichnet, dass** der Druckentlastungsabschnitt (44) radiale Druckentlastungsöffnungen (56) aufweist, die durch eine schlauchartige Ventilmembran (58) verschlossen sind.

5. Vakuumpumpe nach einem der Ansprüche 1 bis 4, **dadurch gekennzeichnet, dass** der Druckentlastungsabschnitt (44) einen Ringraum (54) begrenzt, der über mindestens eine Durchgangsöffnung (50) in dem rohrförmigen Grundkörper mit einem von dem Austrittsabschnitt (45) begrenzten Austrittsinnenraum (46) in Verbindung steht.

6. Vakuumpumpe nach Anspruch 5, **dadurch gekennzeichnet, dass** der Austrittsinnenraum (46) über die Durchgangsöffnung (50) mit dem Druckraum (12) in Verbindung steht.

7. Vakuumpumpe nach Anspruch 5 oder 6, **dadurch gekennzeichnet, dass** der Austrittsinnenraum (46) an einem axialen Ende des Austrittsabschnitts (45) durch eine Flachformfeder (66) verschlossen ist.

8. Vakuumpumpe nach einem der vorhergehenden Ansprüche, **gekennzeichnet durch** einen Rotor (8), der drehbar in einem Gehäuse (2) angeordnet ist und mindestens einen Flügel (9) aufweist, der einen Arbeitsraum (5) in dem Gehäuse (2) in den Druckraum (12) und den Saugraum (11) unterteilt.

## Claims

1. Vacuum pump, more particularly a vane-type pump, for generating an underpressure in a brake booster of a motor vehicle, having a compression chamber (12) which is in communication via an outlet non-return valve with a pressure release chamber, more particularly with the ambient area, wherein the outlet non-return valve is combined in a multi-function valve mechanism (41) with a pressure release valve via which a suction chamber (11) of the vacuum pump is in communication with the pressure release chamber, more particularly with the ambient area,
wherein the multi-function valve mechanism (41) comprises a common multi-function valve body (42) for the outlet non-return valve and the pressure release valve, **characterised in that** the common multi-function valve body (42) has a tubular base body with an axial pressure release section (44) and an axial outlet section (45).

2. Vacuum pump according to claim 1 **characterised in that** the pressure release section (44) is separated from the outlet section (45) by a partition wall (48).

3. Vacuum pump according to claim 1 or 2 **characterised in that** the pressure release section (44) is opened towards the suction chamber (11) at one axial end.

4. Vacuum pump according to one of claims 1 to 3 **characterised in that** the pressure release section (44) has radial pressure release apertures (56) which are closed by a tubular valve membrane (58).

5. Vacuum pump according to one of claims 1 to 4 **characterised in that** the pressure release section (44) defines an annular chamber (54) which is in communication via at least one through opening (50) in the tubular base body with an outlet inside chamber (46) which is defined by the outlet section (45).

6. Vacuum pump according to claim 5 **characterised in that** the outlet inside chamber (46) is in communication with the compression chamber (12) via the through opening (50).

7. Vacuum pump according to claim 5 or 6 **characterised in that** the outlet inside chamber (46) is closed at one axial end of the outlet section (45) by a flat spring (66).

8. Vacuum pump according to one of the preceding claims **characterised by** a rotor (8) which is mounted rotatable in a housing (2) and has at least one vane (9) which divides a working chamber (5) in the housing (2) into the compression chamber (12) and the suction chamber (22).

## Revendications

1. Pompe à vide, en particulier pompe à palettes, pour la génération d'une dépression dans un servofrein d'un véhicule automobile, avec un espace de pression (12) qui est en liaison par le biais d'un clapet antiretour de sortie avec un espace de décompression, en particulier avec l'environnement, le clapet antiretour de sortie étant combiné dans un dispositif de clapet multifonction (41) à une soupape de décompression, par le biais de laquelle un espace d'aspiration (11) de la pompe à vide est en liaison avec l'espace de décompression, en particulier avec l'environnement, le dispositif de soupape multifonction (41) comportant un corps de soupape multifonction commun (42) pour le clapet antiretour de sortie et la soupape de décompression, **caractérisée en ce que** le corps de soupape multifonction (42) commun présente un corps de base tubulaire avec une section de décompression axiale (44) et une section de sortie axiale (45).

2. Pompe à vide selon la revendication 1, **caractérisée en ce que** la section de décompression (44) est séparée par une paroi de séparation (48) de la section de sortie (45).

3. Pompe à vide selon la revendication 1 ou 2, **caractérisée en ce que** la section de décompression (44) est ouverte au niveau d'une extrémité axiale vers l'espace d'aspiration (11).

4. Pompe à vide selon l'une quelconque des revendications 1 à 3, **caractérisée en ce que** la section de décompression (44) présente des ouvertures de décompression radiales (56) qui sont fermées par une membrane de soupape (58) de type tuyau.

5. Pompe à vide selon l'une quelconque des revendications 1 à 4, **caractérisée en ce que** la section de décompression (44) délimite un espace annulaire (54) qui est en liaison par le biais d'au moins une ouverture de passage (50) dans le corps de base tubulaire avec un espace intérieur de sortie (46) délimité par la section de sortie (45).

6. Pompe à vide selon la revendication 5, **caractérisée en ce que** l'espace intérieur de sortie (46) est en liaison par le biais de l'ouverture de passage (50) avec l'espace de pression (12).

7. Pompe à vide selon la revendication 5 ou 6, **caractérisée en ce que** l'espace intérieur de sortie (46) est fermé au niveau d'une extrémité axiale de la section de sortie (45) par un ressort de forme plate (66).

8. Pompe à vide selon l'une quelconque des revendications précédentes, **caractérisée par** un rotor (8) qui est disposé de manière rotative dans un boîtier (2) et présente au moins une palette (9) qui divise un espace de travail (5) dans le boîtier (2), dans l'espace de pression (12) et dans l'espace d'aspiration (11).
